(19) Europäisches Patentamt
European Patent Office
Office européen des brevets

(11) EP 2 003 813 B1

(12) **EUROPEAN PATENT SPECIFICATION**

(45) Date of publication and mention
of the grant of the patent:
**18.03.2009 Bulletin 2009/12**

(51) Int Cl.:
***H04L 9/32*** (2006.01)

(21) Application number: **07110405.3**

(22) Date of filing: **15.06.2007**

(54) **Method and Apparatus for Authentication**

Verfahren und Vorrichtung zur Authentifizierung

Procédé et appareil destinés à l'authentification

(84) Designated Contracting States:
**DE GB**

(43) Date of publication of application:
**17.12.2008 Bulletin 2008/51**

(73) Proprietor: **NTT DoCoMo, Inc.**
**Tokyo (JP)**

(72) Inventors:
- **Kounga, Gina**
**35200 Rennes (FR)**
- **Lachmund, Sven**
**80687, Munich (DE)**
- **Walter, Thomas**
**80935, Munich (DE)**

(74) Representative: **Betten & Resch**
**Patentanwälte**
**Theatinerstrasse 8**
**(Fünf Höfe)**
**80333 München (DE)**

(56) References cited:
**US-A1- 2006 023 887**

- **WEIMERSKIRCH A ET AL ASSOCIATION FOR COMPUTING MACHINERY: "Identity Certified Authentication for Ad-hoc Networks" PROCEEDINGS OF THE FIRST ACM WORKSHOP ON SECURITY OF AD HOC AND SENSOR NETWORKS. SASN 2003. FAIRFAX, VI, OCT. 31, 2003, PROCEEDINGS OF THE ACM WORKSHOP ON SECURITY OF AD HOC AND SENSOR NETWORKS. SASN, NEW YORK, NY : ACM, US, 31 October 2003 (2003-10-31), pages 33-40, XP002428196 ISBN: 1-58113-783-4**
- **PLOBL K ET AL: "Towards a Security Architecture for Vehicular Ad Hoc Networks" AVAILABILITY, RELIABILITY AND SECURITY, 2006. ARES 2006. THE FIRST INTERNATIONAL CONFERENCE ON VIENNA, AUSTRIA 20-22 APRIL 2006, PISCATAWAY, NJ, USA,IEEE, 20 April 2006 (2006-04-20), pages 374-381, XP010912870 ISBN: 0-7695-2567-9**
- **P. KAMET ET AL.: "An Identity-Based Security Framework For VANETS" INTERNATIONAL WORKSHOP ON VEHICULAR AD HOC NETWORKS VANET 06VANET 06, 29 September 2006 (2006-09-29), pages 94-95, XP002459425 LOS ANGELES US**

**Description**

**FIELD OF INVENTION**

The present invention relates to a method and an apparatus for authentication, in particular in a vehicular ad-hoc network.

**BACKGROUND OF THE INVENTION**

Vehicular ad-hoc networks (VANET) are expected to improve the transmission of traffic information and, thus, to improve the performance of private transportation systems as well as safety of both car drivers and passengers. They rely on vehicles with wireless communication capabilities to exchange traffic information using multi-hop communications. However, before they are used in large scale some security issues must be solved. One of these is providing privacy while permitting vehicles to check the authenticity of the messages they receive as discussed in P. Papadimitratos, A. Kung, J.-P. Hubaux, and F. Kargl, "Privacy and identity management for vehicular communication systems: A position paper," in Workshop on Standards for Privacy in User-Centric Identity Management, July 2006; or M. Raya, P. Papadimitratos, and J.-P. Hubaux, "Securing Vehicular Communications," in IEEE Wireless Communications Magazine, Special Issue on Inter-Vehicular Communications, 2006. Since messages received from other vehicles may have an impact on individuals' safety, it is important that their reliability is checked. However, since in VANET authorities may not always be present that are able to guarantee that a given information is true, vehicles must be able to evaluate the reliability of received information by themselves.

One approach to achieve this is to define a threshold corresponding to the minimum number of different vehicles that must have sent signed messages containing the same information within a certain timeframe to consider that information as valid. However, messages must not be signed with private keys that are bound to their owner's identity since this permits an attacker to trace a vehicle by checking wether a digital signature can be verified with a specific public key on all received messages. One possibility for solving this problem would be that vehicles use many public/private key pairs whose corresponding certificates do not contain any identity and are valid during a short time interval only. Then, an attacker will not be able anymore to link some digital signatures to a given vehicle. This solution is interesting. However, it requires vehicles to store in advance all the public/private key pairs they will need to use. Considering that vehicles may need to use many different public/private key pairs each day, the storage space required to store all the key pairs that the vehicle will have to use within a certain time frame (e.g. a year), may reach hundreds of Megabits. This solution first increases the car manufacturing costs and second introduces a scalability problem at the certification authority (CA), as it will have to maintain hundreds of Megabits for each vehicle. Considering the fact that one car manufacturer may sell several hundred thousands cars each year, this solution introduces some certificate management problems at the CA side.

WEIMERSKIRCH A ET AL ASSOCIATION FOR COMPUTING MACHINERY: "Identity Certified Authentication for Ad-hoc Networks" PROCEEDINGS OF THE FIRST ACM WORKSHOP ON SECURITY OF AD HOC AND SENSOR NETWORKS. SASN 2003. FAIRFAX, VI, OCT. 31, 2003, PROCEEDINGS OF THE ACM WORKSHOP ON SECURITY OF AD HOC AND SENSOR NETWORKS. SASN, NEW YORK, NY: ACM, US, 31 October 2003 (2003-10-31), pages 33-40, XP002428196 ISBN: 1-58113-783-4 discloses an identity certified authentication for Ad-hoc networks. The protocol is based on zero common-knowledge authentication and can be used to authenticate messages.

SUMMARY OF THE INVENTION

The present invention is defined in the independent claims. The dependent claims define embodiments of the invention.

According to one embodiment there is provided a method for authentication of a first terminal k towards a second terminal in an ad-hoc network, said method comprising:

generating the public/private key pairs which said first terminal will have to use based on a unique secret value $s_k$ based on repeatedly applying a one way hash function on said secret value $s_k$, whereas the number of repeatedly applying said hash function depends on the time when said authentication is performed;
checking the authenticity of a so generated public key by verifying that the public key is bound to a public hash-code value V signed by a trusted authority.

Repeatedly applying the hash function for generating the public/private key pair depending on the time avoids the need for storing many key pairs in the terminals in advance. Moreover, checking by verifying the binding to a public hash-code value provides the necessary security and still is easy to handle by one public hash-code value being used for many terminals.

According to one embodiment the method comprises:

generating an initialization value $P_k$ by said first terminal k based on repeatedly applying m times a one-way hash function on a secret value $s_k$ which is specific for said first terminal k;

calculating by a trusted authority one or more derived initialization values based on a secret value K only known to said trusted authority or certified by a trusted authority and further based on said value $P_k$;

generating a public/private key pair by said first terminal based on a secret value $s_k$ whereas said public/private key pair is generated based on repeatedly applying a one-way hash function on said secret value $s_k$ a number of times n, n<m, and further based on said one or more derived values, whereas the number of times n which said hash function is applied depends on the time at which said authentication is to be performed, and whereas said authentication comprises:

verifying by said second terminal that the public key generated by said first terminal is bound to said secret value K based on using a value derived by applying m-n times said one-way hash function on the value obtained by applying said hash function n times on said secret value $S_k$, thereby verifying that the public key is bound to said public hash-code value V which is derived based on said secret value K.

The initialization values and the one or more derived values provide the binding to the secret value K.

According to one embodiment the number how many times the hash function has to be applied depends on how many time intervals of fixed length have passed until the authentication is performed.

In this manner fixed time intervals are provided into which the "total usage time" is divided. Depending on the interval into which a certain instantaneous use falls, the hash function is applied the corresponding number of times.

According to one embodiment the method comprises:

generating said initialization value based on $P_k = \prod_{j=0}^{m} f^j(s_k)$

generating said private key $K_i$ of said public/private key pair based on $\prod_{j=0}^{m-i-1} f^j(s_k)$ and further based

on said one or more derived values;

generating said public key of said public/private key pair based on $g^{K_i}$;

generating a helper value $H_i$ based on $\prod_{j=m-i}^{m} f^j(s_k)$;

whereas said verification by said second terminal comprises:

calculating $(g^{K_i})^{H_i}$ to verify that the public key $g^{K_i}$ generated by said first terminal is bound to said secret value K.

The helper value links the initialization value and the public/private key at time interval $T_i$ so that when they are combined the binding to the value K can be proven.

According to one embodiment said one or more derived initialization values comprise a value $Q_k$ being derived based on a division of the secret value K by $P_k$ and said private key of public/private key pair is generated based on

$$Q_k * \prod_{j=0}^{m-i-1} f^j(s_k) .$$

According to one embodiment said private key of public/private key pair is generated based on

$$a_i * \prod_{j=0}^{m-i-1} f^j(s_k)$$ with $\alpha_i \neq \alpha_{i+n}$ for $i \in 0,1,...,m-1$ and $n \in 1,2,...,m-i-1$, and whereas said helper value is generated based on $\dfrac{1}{a_i} * \prod_{j=m-i}^{m} f^j(s_k)$ .

The value $a_i$ introduces anonymity into the mechanism.

According to one embodiment said one or more derived initialization values comprise a value $Q_k$ being derived based on $K = P_k * Q_k + r_k$, and whereas for verifying the authentication said second terminal calculates

$$(g^{K_i} * g^{A * \frac{a_i * r_k}{P_k} * \prod_{j=0}^{m-i-1} f^j(s_k)})^{H_i}$$

According to a further embodiment the second terminal instead calulates

$$(g^{K_i} * g^{A * \frac{a_i * r_k}{P_k} * \prod_{j=0}^{m-i-1} f^j(s_k)})^{H_i}$$

whereas the value A is a large integer.

According to one embodiment the method comprises:

dividing a certain time period into n intervals, whereas in the i-th interval the private key $K_i$ is calculated based on

$$\prod_{j=0}^{m-i-1} f^j(s_k) .$$

According to one embodiment authentication is only considered to be successful if the number of valid signatures received within a certain time period by the second terminal exceeds a certain threshold.

This introduces a further security check and enables to check the reliability of the message.

According to one embodiment the value K is chosen by said first terminal or by an authority related to said terminal like a car manufacturer and a hash value derived from this secret value is certified by a trusted authority and used for verifying the authentication.

This reduces the communication efforts necessary between the terminals and the certification authority acting as "trusted authority".

According to one embodiment the ad-hoc network is a vehicular ad-hoc network, and said method comprises:

during an initialization phase, for a car k, calculating $P_k$ and the one or more derived initialization values,
in a time interval i, calculating the private key $K_i$, the public key, and the helper value and generating a certificate containing the public key corresponding to the private key with which a message is encrypted and being signed with the private key $K_i$;
transmitting the encrypted message and the certificate, the helper value and

$$g^{\frac{a_i * r_k}{P_k} * \prod_{j=0}^{m-i-1} f^j(s_k)}$$

to the second terminal;

verifying the authentication by the second terminal by verifying that the public key of the certificate is bound to said secret value K.

According to one embodiment instead of

$$g^{\frac{a_i * r_k}{P_k} * \prod_{j=0}^{m-i-1} f^j(s_k)}$$

the term

$$g^{A * \frac{a_i * r_k}{P_k} * \prod_{j=0}^{m-i-1} f^j(s_k)}$$

is calculated and transmitted to the second terminal, whereas A is a large integer.

According to one embodiment the private key with which the message is signed is different from the private key used for signing the certificate being used for the verification.

This avoids the need to send the private key from the secure environment (black box) to the car.

According to one embodiment there is provided an apparatus for authentication of a first terminal k towards a second terminal in an ad-hoc network, said apparatus comprising:

a module for generating the public/private key pairs which said first terminal will have to use based on a unique secret value $S_k$ based on repeatedly applying a one way hash function on said secret value $S_k$, whereas the number of repeatedly applying said hash function depends on the time within said time frame when said authentication is performed;

a module for transmitting the public key thus generated to a terminal for checking the authenticity of the thus generated public key by verifying that the public key is bound to a public hash-code value V signed by a trusted authority.

According to one embodiment there is provided an apparatus for authentication of a first terminal k towards a second terminal in an ad-hoc network, said apparatus comprising:

a module for receiving a public key which has been generated by said first terminal by generating the public/private key pairs which said first terminal will have to use based on a unique secret value $s_k$ based on repeatedly applying a one way hash function on said secret value $s_k$, whereas the number of repeatedly applying said hash function depends on the time when said authentication is performed;

a module for checking the authenticity of the thus received public key by verifying that the public key is bound to a public hash-code value V signed by a trusted authority.

According to one embodiment there is provided an apparatus further comprising:

one or more modules for implementing the further features of a method according to one of the embodiments of the invention.

According to one embodiment there is provided a computer program comprising computer program code which when being executed by a computer enables said computer to carry out a method according to one of the embodiments of the invention.

**DESCRIPTION OF THE DRAWINGS**

Fig. 1 schematically illustrates a timing scheme for generating keys according to an embodiment of the invention.

Fig. 2 schematically illustrates an authentication method according to an embodiment of the invention.
Fig. 3 schematically illustrates a timing scheme according to a further embodiment of the invention.
Fig. 4 schematically illustrates the relationship of parameters and equations used in an embodiment of the invention.
Fig. 5 schematically illustrates the messages generated and sent in an embodiment of the invention.

## DETAILED DESCRIPTION

The present invention will be described in the following by means of exemplary embodiments.

Before describing in detail the embodiments of the invention, some terms which will be used hereinafter are summarily compiled and somewhat explained in the following:

| | |
|---|---|
| $m$ | Number of time intervals within one maintenance interval (plus some grace period) |
| $T_i$ | The $i$ -th time interval |
| $C_k$ | The $k$ -th car manufactured |
| $BB_k$ | The black box in the $k$ -th car manufactured |
| nbSignatures | The number of valid signatures that must be received to reach the threshold t |
| max time | The time during which the threshold t must be reached |
| lifetime | The validity period of each certificate |
| $t$ | The threshold of valid messages to be received from different cars within time interval |
| | of length max time |
| $K_i$ | Private key valid in time interval $T_i$ |
| $g^{K_i}$ | Public key valid in time interval $T_i$ |
| $Cert_i$ | Certificate valid in time interval $T_i$ |
| $H_i$ | Helper value valid in time interval $T_i$ |
| $A$ | Large integer |
| $a_i$ | Randomly chosen integer |
| $pub_{T_i}$ | The public key used by $C_k$ in time interval $T_i$ |
| $priv_{T_i}$ | The private key used by $C_k$ to sign the messages broadcasted in time interval $T_i$ |

According to one embodiment there is provided a mechanism that permits vehicles to generate all the public/private key pairs they will have to use within a certain time frame (e.g. a year) based on a unique secret value. The authenticity of so generated public keys can be checked by verifying that these public keys are uniquely bound to a public hash-code value V signed by a trusted CA (certification authority). The public hash-code value is the same for all car manufacturers that use the same CA (or for all cars manufactured by the same manufacturer). All cars prove the validity of their public keys based on the same hash-code value. Therefore, V does not permit to identify which vehicle has generated a public key. This avoids the unlikely situation that the one car of one specific manufacturer is traced among a number of cars (from different car manufacturers). Further, there is no need of a CA for verification.

When a car verifies the authenticity of a message, it cannot deduce which entity has sent the message. The authenticity of a message can be verified but without tracing the message back to a specific entity, thus providing anonymity. At the CA side, the solution does not increase the management requirements, since the CA just has only to store one hash-code value (or to store only one hash-code value per manufacturer, as will become apparent somewhat later) and because cars manage their certificates by themselves. This reduces significantly the storing capabilities required at the vehicle side. According to one embodiment the mechanism further prevents cars from signing a large number of messages with different keys within a short period of time to give the impression that many different cars have sent this message. Moreover, according to a further embodiment the mechanism provides interoperability between cars that are manufactured by different entities.

According to a further embodiment there is additionally defined a threshold so that information contained in messages received from other cars are considered reliable if the number of valid messages received from different cars that contain the same information exceeds the threshold. This further improves the reliability of the information contained in the message.

Now some embodiments will be described in somewhat more detail. In one embodiment the authentication method is applied to a vehicular ad-hoc network (VANET) where one car (being a "first terminal") has to be authenticated by a second car (a "second terminal"). In this embodiment it is assumed that vehicles are equipped with black boxes that are configured during the manufacturing process to permit the generation of anonymous public/private key pairs -as will be explained later. Further it is assumed that these black boxes can operate securely and that they are tamper resistant. Black boxes in one embodiment store security parameters that can be updated regularly, e.g. once a year when the car is undergoing maintenance. It is further assumed that these black boxes are able to generate public/private key pairs and to issue certificates.

In this embodiment, each car $C_k$ has a black box $BB_k$ that generates, in each time interval $T_i$ of length *lifetime* :

- $pub_{T_i}$ /$priv_{T_i}$ the public/private key pair that the car $C_k$ must use in $T_i$ ;
- The corresponding certificate $Cert_i$ signed with $BB_k$ 's private key $K_i$ that is only valid in interval $T_i$ as it will be explained later ;
- Public parameters - such as the public key $g^{K_i}$ corresponding to the private key used by the black box to sign the certificate - to use for checking the validity of the certificate.

These values are sent to the car $C_k$.

According to one embodiment the private key $K_i$ used by the black box to sign certificates and the corresponding public key $g^{K_i}$ are generated based on a secret value $s_k$ securely transferred to $BB_k$ during the manufacturing process in such a way that:

- Different black boxes can not generate the same key pairs;
- Certificates are only valid if they are generated by a black box that respects the "security requirements" or "security parameters" defined by the car manufacturer, whereas for simplicity it is considered that all car manufacturers use the same security requirements. The term security requirements here may refer to such parameters like *lifetime* and *maxtime* which may be required to be the same for all cars. According to one embodiment, however, they may also use different security requirements or security parameters.

The aforementioned security requirements or parameters prevent a car from being able to sign the same message with different keys to pretend that it was signed by different cars, and they thereby enhance reliability of information contained in a message.

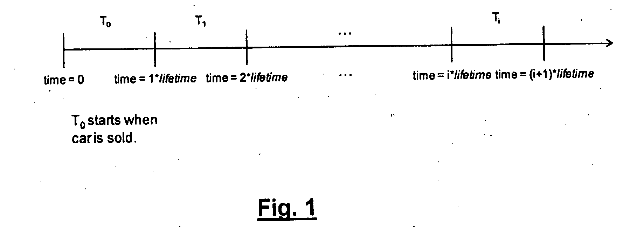

After $C_k$ has received the key pair $pub_{T_i}$ /$priv_{T_i}$ it can use it during a certain time period of length *lifetime* to authenticate the messages it sends. For that it signs its message with the private key $priv_{T_i}$ received from the black box and sends the signed message to other cars along with $Cert_i$ and the public parameters issued by $BB_k$. The time intervals *lifetime* are schematically illustrated in Fig. 1.

When the other cars receive the signed message, they verify that the received certificate $Cert_i$ (generated during interval $T_i$) is valid and was issued by a black box that respects the defined security requirements. If it is the case, the cars use the $pub_{T_i}$ contained in the certificate to verify that the signature on the message is valid. If it is valid, then the cars know that the message was sent by a car that is not able to sign the same message many times to pretend it was signed by different cars. The cars can use the newly received message to evaluate the reliability of the information previously received from other cars and/or to evaluate the reliability of the information that will be received in the future.

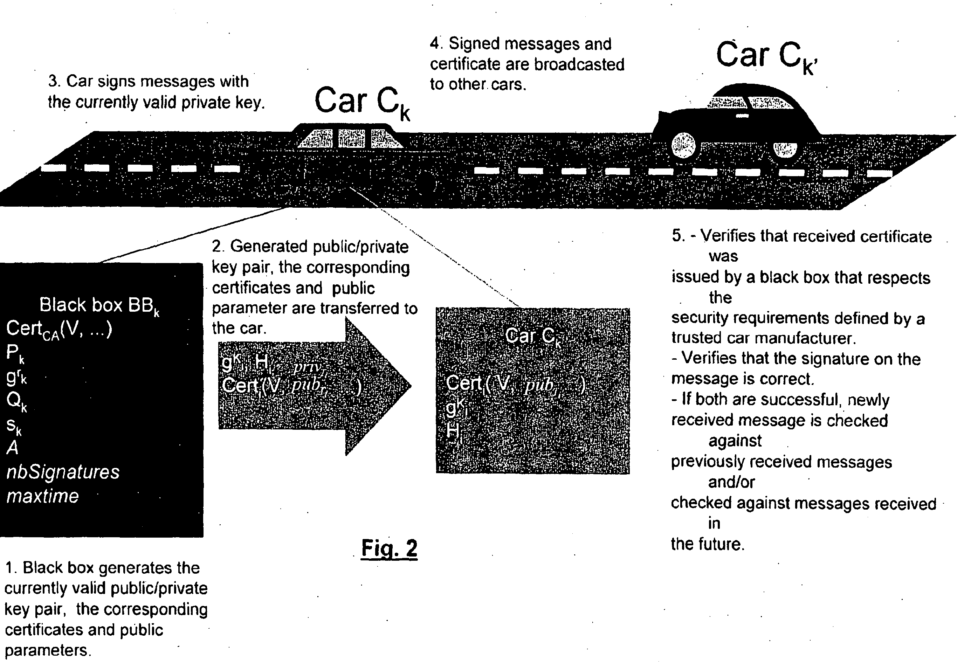

The process that permits to verify the reliability of information contained in received messages according to one embodiment will now be described in somewhat more detail in connection with Fig. 2. As shown in Fig. 1, the first time interval $T_0$ may begin when the car is sold and will be renewed during maintenance like $s_k$.

At first the black box of car k generates the currently valid public/private key pair, the corresponding certificate and public parameters such as a helper value (explained later). These are then sent from the black box to the car. The car then signs messages with the currently valid private key and broadcasts the messages and the corresponding certificate to other cars. The other car $C_{k'}$ verifies that the received certificate was issued by a black box that respects the security requirements defined by a trusted car manufacturer and verifies that the signature on the message is correct. According to one embodiment this is done by checking that the signature on the certificate is valid and that the public key is bound to V by the right relation. This will prove that the car was manufactured by an entity whose check value had been certified by the CA and therefore, by an entity that respects the requirement regarding max*time* and *lifetime.*

If both are correct the message may be regarded as validly authenticated.

According to one embodiment there may be used a further mechanism which is directed to avoid cars to sign many times a given message using different public/private key pairs. This will now be explained in the following.

To avoid that a given car is able to sign the same message many times with different private keys, a threshold *t* may be defined that corresponds to the minimum number of different cars that must have signed a message during a timeframe max *time.* max *time* preferably is shorter than the *lifetime* of issued certificates, preferably even much shorter.

We have:

$$t = \frac{nbSignatures}{\max time}$$

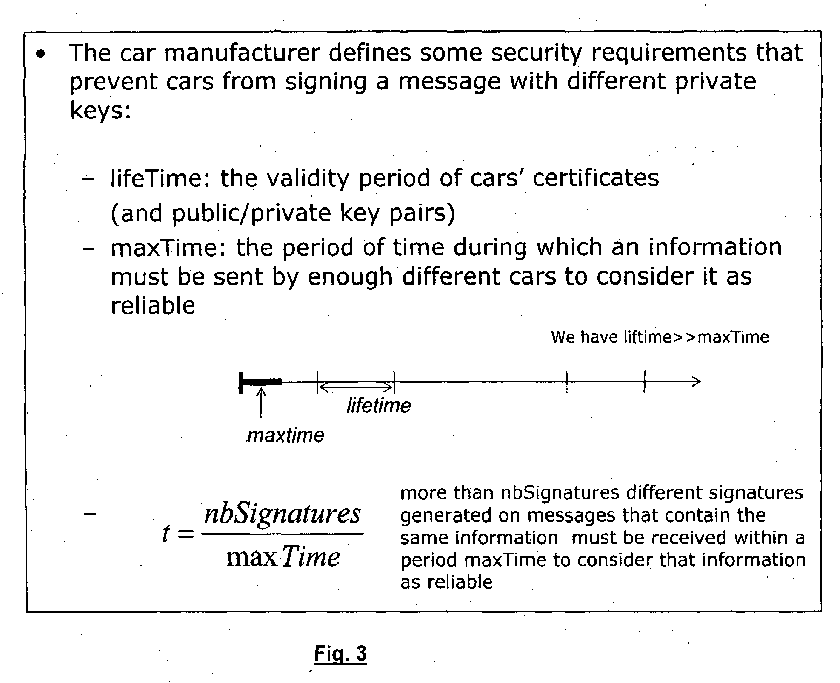

The relationship between max*time* and *lifetime* is exemplarily shown in Fig. 3. The values for *lifetime* and *t* may be specified when the car is manufactured. The smaller the value of maxtime is, the lesser is the likelihood of cars using different keys for signing the same message. However, in order to have still a certain likelihood that the same message is received from different cars at all, max*time* should not be made too small. The distinct value chosen for max*time* may depend on the weight given by the system designed to these two conflicting requirements.

With this basic configuration cars are able to use different private keys to sign their messages, however, if max*time* is chosen sufficiently small they are not able to sign the same message with enough different keys to make the information contained in that message reliable, i.e. exceeding the threshold *t*.

Now there will be described in somewhat more detail an embodiment which is capable of distinguishing message emitters and providing anonymity at the same time.

Prior to use of the authentication scheme according to an embodiment of the invention, certain system parameters need to be agreed by all parties, as follows.

- G=(G,*) is a finite cyclic group of order q (for some large *q),* g $\in$ *G is* a generator of G, and we assume that computing discrete logarithms in G with respect to g is computationally infeasible. For example, G might be a large multiplicative subgroup of $Z_p^{\bullet}$ for some large prime *p,* where q is a large prime dividing p-1; alternatively G could be the group of points on an elliptic curve (usually written additively).
- *h* is a cryptographic (one way) hash-function mapping arbitrary length binary strings to strings of a fixed length ($\ell$ say, where a typical value for $\ell$ might be 224).
- *f* is a cryptographic (one-way) hash-function mapping the set {0,1,...,q-1} onto itself. In practice, *f* might, for example, be derived from *h*.
- *m* $\geq$1 is a positive integer that determines the number of key pairs available to the terminal over the intervals $T_i$.

In this embodiment, to avoid cars to be traced with the check value used by their black boxes, the manufacturer is issued a certificate by a CA that contains a check value *V:*

$$V = h(g^{A \bullet K}) \qquad \text{Equation 1}$$

Here K is a secret value only known by CA, A is a large integer which serves the purpose of making exponents an integer for easier calculation during the later steps, g is some generator which will be explained in somewhat more detail later, and h is a one-way hash function for which it is computationally unfeasible to perform reverse computation or a cryptographic hash function.

That certificate is securely transferred to black boxes during the manufacturing process. This approach permits cars that are manufactured by different car manufacturers to use a same check value to verify the reliability of some received information.

In the following it will be explained how cars according to one embodiment can generate anonymous key pairs that are uniquely bound to V (or bound to K through which they are also bound to V). The solution is based on a repeated application of one-way hash functions similar to the approach described in European patent application no. 06122041.4 of the same applicant as the present one from which further explanations of the one-way hash functions and the key generators used may be taken.

According to one embodiment, in Equation 1, *K* is a positive large integer such that for any positive integer $P_k = \prod_{j=0}^{m} f^j(s_k)$, $K > P_k$ (i.e. K is larger than $P_k$). Preferably there is even $K \gg P_k$. *A* is a large integer and m is the maximum number of different key pairs that a car uses until the next maintenance (with a bit of reserve) -it also corresponds to the number of time intervals within one maintenance interval (plus some grace period). In other words, m is an integer which is at least as large as the total number of time intervals $T_i$. Then, it always exist positive integers

$Q_k$ and $r_k$ such that:

$$K = P_k * Q_k + r_k$$
$$= P_k * (Q_k + \frac{r_k}{P_k})$$

**Equation 2**

In other words, the values $Q_k$ and $r_k$ are "derived values" which are derived based on the secret value K and further on $P_k$ which is based on repeatedly applying the one-way hash function f on the secret value $s_k$. The relationship in equation 2 binds the secret value to the derived values $Q_k$ and $r_k$ and further to some value obtained by repeatedly applying the one-way hash function f to $s_k$.

Through equation 2 the value K is expressed as a product of $P_k$ and $Q_k$ plus some remainder $r_k$. This makes clear why it is preferable to have $K >> P_k$ because this makes it easier to find values $Q_k$ and $r_k$ for the different cars.

However, it may happen that the product in equation 2 has no remainder $r_k$, in this case K is just the product of $P_k$ and $Q_k$. This, however, from a security point of view is less preferable than if equation 2 has a remainder, and according to one embodiment if equation 2 has no remainder the CA asks for $P_k$ to be changed..According to one embodiment $Q_k$ should be such that $K >> P_k * Q_k$ in such a way that $r_k$ is large.

Every car $C_k$ has a black box $BB_k$ which receives a secret value $S_k$. The manufacturing process should guarantee that $S_k$ is not used by another black box $BB_{k'}$, $k \neq k'$.

$P_k$ is generated with $S_k$ as follows:

$$P_k = \prod_{j=0}^{m} f^{j}(s_k)$$

**Equation 3**

Then $P_k$ is sent to the CA that issued the certificate containing $V$ to the manufacturer. The CA has a secret value K -cf Equation 2- such that $K >> P_k$. After having received $P_k$ the CA computes $g^{r_k}$ and $Q_k$, where $Q_k$ and $r_k$ fulfill Equation 2 and send it back to the manufacturer. Then, the manufacturer securely transfers the following parameters into the black box $BB_k$ of car $C_k$ :

- Certificate containing V
- $P_k$
- $g^{r_k}$
- $Q_k$
- $S_k$
- A
- nbSignatures
- max*time*

These values are securely stored by $BB_k$.

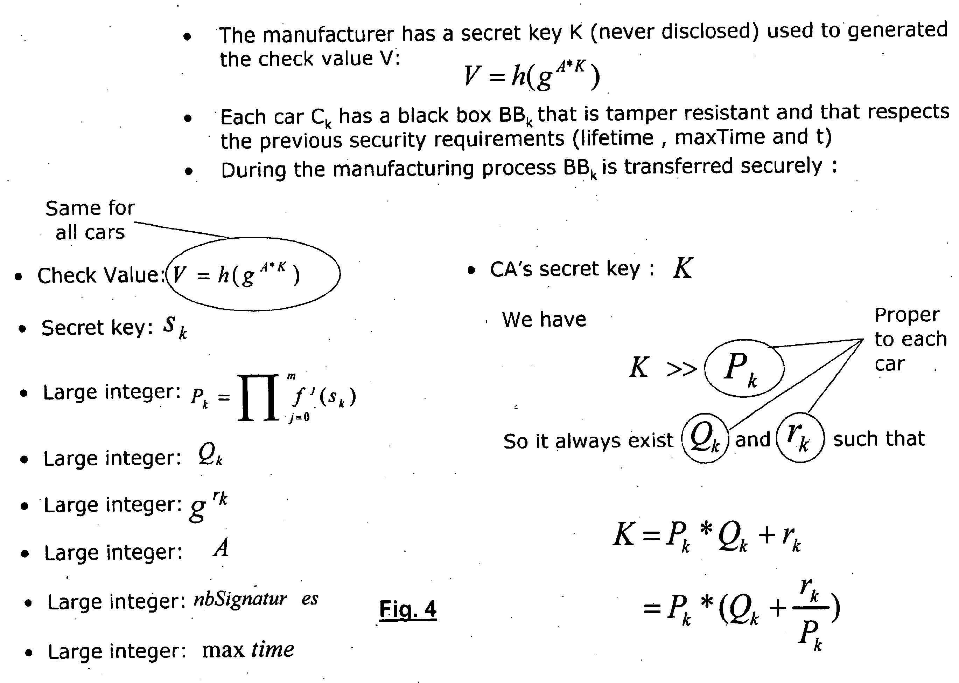

The parameters used in an embodiment of the invention and their relationship is schematically summarized in Fig. 4.

In time interval $T_i$, $BB_k$ chooses a random integer $a_i$ that it never discloses. $a_i$ is chosen such that:

- $(A * a_i * r_k)$ mod $P_k = 0$ or $P_k$ is a multiple of $A * a_i r_k$
- $a_i \neq a_{i+n}$ for $i \in 0,1,..., m - 1$ and $n \in 1,2,..., m - i - 1$

The usage of the value $a_i$ provides anonymity to the mechanism because it makes it difficult to trace the sent messages in a manner which could lead to a hint of how the sequence of repeated applications of one-way hash function f operates. This is because in the publicly sent values $a_i$ introduces a further element unknown to an attacker which makes it extremely difficult to trace an individual terminal or car based on the messages sent by it.

Then, $BB_k$ generates the private key $K_i$ that it uses to sign the certificate $Cert_i$ as follows:

$$K_i = A * a_i * Q_k * \prod_{j=0}^{m-i-1} f^j(s_k)$$

Equation 4

The corresponding public key is:

$$g^{K_i} = g^{A*a_i*Q_k*\prod_{j=0}^{m-i-1} f^j(s_k)}$$

Equation 5

$BB_k$ further generates the helper value:

Equation 6

$$H_i = A * \frac{1}{a_i} * \prod_{j=m-i}^{m} f^j(s_k)$$

Then $BB_k$ issues the certificate $Cert_i$ to $C_k$ - the car $k$ . $Cert_i$ contains the public key $pub_{T_i}$ and the hash-code value $V$ signed by the CA and is signed with $K_i$. The signed hash-code $V$ is put in the certificate to permit this embodiment to be used by cars whose check values were issued by different CA that trust each other.
$BB_k$ also sends:

- The private key $priv_{T_i}$ that $C_k$ uses to sign its messages
- $g^{k_i}$ ;
- $H_i$;
- $$g^{A*\frac{a_i*r_k}{P_k}*\prod_{j=0}^{m-i-1} f^j(s_k)}$$

to car $C_k$.
$C_k$ uses $priv_{T_i}$ to sign messages being sent to other cars. Then when $C_k$ sends the signed message msg, it also sends along with it its public key certificate $Cert_i$ that contains $pub_{T_i}$ , $g^{K_i}$ , $H_i$ and $g^{A*\frac{a_i*r_k}{P_k}*\prod_{j=0}^{m-i-1} f^j(s_k)}$ .

When a car receives the previous elements, it verifies that $Cert_i$ was correctly signed by $BB_k$ and that it is valid. In order to perform these verifications, the car computes:

$$V^* = (g^{K_i} * g^{A * \frac{a_i * r_k}{P_k} * \prod_{j=0}^{m-i-1} f^j(s_k)})^{H_i}$$

$$= (g^{A * a_i * Q_k * \prod_{j=0}^{m-i-1} f^j(s_k)} * g^{A * \frac{a_i * r_k}{P_k} * \prod_{j=0}^{m-i-1} f^j(s_k)})^{A * \frac{1}{a_i} * \prod_{j=m-i}^{m} f^j(s_k)}$$

$$= g^{A * (Q_k + \frac{r_k}{P_k}) * (\prod_{j=0}^{m-i-1} f^j(s_k)) * (\prod_{j=m-i}^{m} f^j(s_k))}$$

$$= g^{A * (Q_k + \frac{r_k}{P_k}) * P_k}$$

$$= g^{A * K}$$

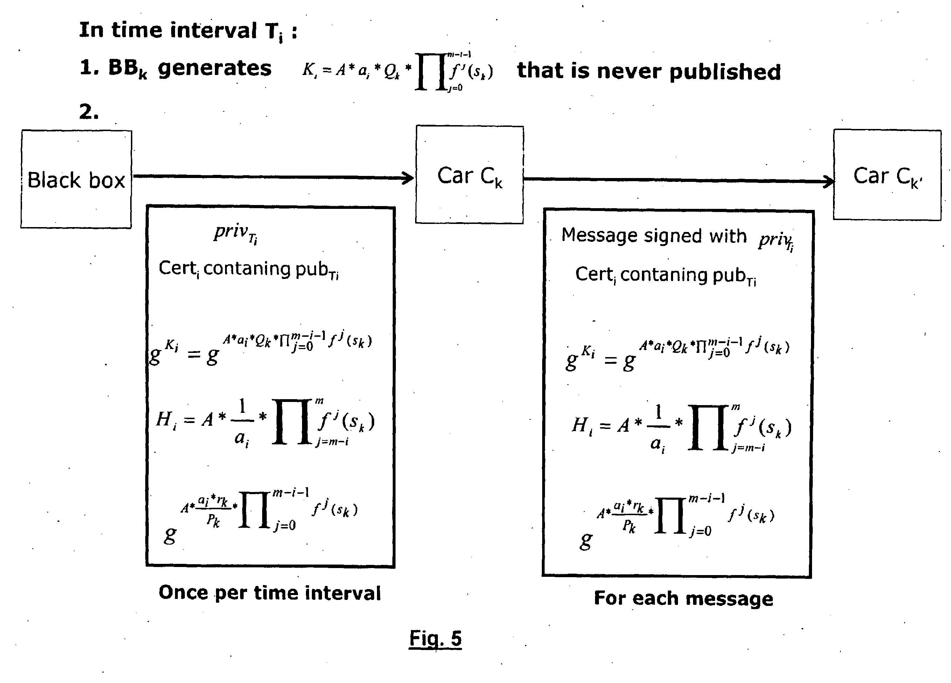

The messages generated and sent according to one embodiment of the invention are illustrated in Fig. 5.

The following is noted here:

We have:

- $g^{K_i}$ is defined in Equation 5
- $H_i$ is defined in Equation 6

Moreover it should be noted that in the above solution the private key $K_i$ is not used for signing the messages, for that purpose a separate private key $priv_{T_i}$ is used. $K_i$ is only used to sign the certificate $Cert_i$ which is used for proving the validity of the public key $g^{K_i}$. The reason for using a different public key $priv_{T_i}$ for signing message msg is that with this approach the sensitive private key $K_i$ needs not to be distributed to the outside of the black box (to the car). Otherwise the car might be able to generate its "own" certificate and try to sign one message multiple times by using the thus generated certificates. This can be avoided by keeping the private key $K_i$ inside the black box and sending only the certificate $Cert_i$ to the car. The private key $priv_{T_i}$ and its corresponding public key may be generated by any suitable manner and then be sent by the black box to the car and are then used for signing/checking. The real authentication is done then with the public key contained in the certificate $Cert_i$ .

For that purpose, after the car has computed $V^*$ , it verifies whether $h(V^*) = V$. If it is the case, then the car checks the signature on $Cert_i$ with $g^{K_i}$. If the signature is valid, the car knows that the signature was generated by a car whose black box operates in a way that respects the time requirements specified before, in other words in a way that follows the security requirements of the mechanism, i.e. that in a time interval $T_j$ there is generated a corresponding private/public key pair based on values which have been transferred into the terminal (or a black box thereof) in a secure and tamper resistant manner, which are bound to secret value K of the CA and which represents the relation between *maxtime* and *lifetime* as represented in Figure 3. Then, if $Cert_i$ 's expiration date is not passed, the car can use it to verify the signature on msg. If one of the previous verifications fails, the car considers that the signature on the received message is invalid. This verification process is repeated for each message received by the car.

If the mechanism uses further a threshold as mentioned before, i.e. when $t$ is reached, in other words when the car has received at least *nbSignatures* messages during a time max*time* that contain a same information, it considers that the information contained in the messages that were signed by *nbSignatures* different signatures is reliable.

It should be noted that a car only needs to check the validity of $Cert_i$ the first time that it receives $Cert_i$ in the interval $T_j$. This is because a valid certificate stays valid for the entire time interval.

In the following some remarks on the security of the mechanism are made.

In the described mechanism, each black box $BB_k$ only knows the value $h(g^{A*K})$. Since one-way hash functions are computationally infeasible to reverse in practice and since finding K from $g^{A*K}$ is as well computationally infeasible when K is large, black boxes cannot find $K$. Similarly since the $BB_k$ only knows $g^{r_k}$, it cannot find $r_k$. Therefore, it can not find $K$ by knowing $Q_k$ .

If one focuses on the verifying car, it does not know $Q_k$ and can not find it from $g^{K_i}$. Moreover, the verifying car neither know $K$ nor $^r k$, and can not find them from

$$g^{A*\frac{a_i*r_k}{P_k}*\prod_{j=0}^{m-i-1} f^j(s_k)}$$

since $a_i$ is not disclosed by $BB_k$.

Tracing cars by exploiting the existing linkage between helper values is also not possible here since, by devising $H_{i+1}$ by $H_i$ and $H_{i+2}$ by $H_{i+1}$ the car will obtain $\frac{a_i}{a_{i+1}} * f^{m-i-1}(s_k)$ and $\frac{a_{i+1}}{a_{i+2}} * f^{m-i-2}(s_k)$.

Since $\frac{a_i}{a_{i+1}} \neq \frac{a_{i+1}}{a_{i+2}}$ we have $\frac{a_i}{a_{i+1}} * f^{m-i-1}(s_k) \neq f(\frac{a_{i+1}}{a_{i+2}} * f^{m-i-2}(s_k))$ In the following there will be described an embodiment which provides a somewhat modified mechanism directed at reducing the interactions with the CA during the manufacturing process

In order to simplify the process that permits to transfer security parameters to black boxes, one can e.g. reduce the number of interactions between the manufacturer and the CA. This is achieved if the generation of the check value is done by each manufacturer and not anymore by the CA. In this case each manufacturer should:

- Have a secret value $K$ that it must manage (keep secret, protect from compromise)
- Choose a large integer A
- Generate its own check value $V$

After $V$ has been generated, the manufacturer sends it to a CA that issues it a certificate containing $V$.

Then, during the manufacturing process, the manufacturer can always define $P_k$ such that $K >> P_k$ since the manufacturer knows $K$. It can also generate all the values that must be transferred to the black boxes. According to one embodiment $Q_k$ should be such that $K >> P_k * Q_k$ in such a way that $r_k$ is large

The CA can manage a list containing the check values of all the manufacturers that manufacture some cars whose black boxes respect some given security mechanisms or security requirements. This list should not contain the name of the manufacturers that are using the check value to avoid one car of one specific manufacturer is traced among a number of cars (from different car manufacturers). This list will permit that the solution defined in this document can be used even by different car manufacturers.

The list should be issued to car manufacturers before the manufacturing process begins. Then, each manufacturer can transfer it in its black boxes that can use it to verify the reliability of received messages. Then it may not be necessary that $V$ is contained in the certificate $Cert_j$ issued in $T_j$.

In the following there will be described a further embodiment directed to reducing the number of certificates stored by cars in each time interval.

The mechanism defined in the previous section can be improved to reduce the number of key pairs that needs to be stored by $C_k$. This is achieved if $BB_k$ signs the messages sent by $C_k$. Then $BB_k$ does not need to issue $pub_{T_i}$ / $priv_{T_i}$ to $C_k$ anymore. $BB_k$ only sends:

- $Cert_i$ that contains the public key $g^{K_i}$ ;
- $H_i$ ;
- 

$$g^{A*\frac{a_i*r_k}{P_k}*\prod_{j=0}^{m-i-1} f^j(s_k)}$$

to $C_k$. After $BB_k$ has signed a message, it sends it to $C_k$ that broadcasts it along with $Cert_i$, $H_i$ and

$$g^{A * \frac{a_i * r_k}{P_k} * \prod_{j=0}^{m-i-1} f^j(s_k)}$$

Then, the cars that will check the validity of the messages sent by $C_k$ will use $g^{K_i}$ to verify the validity of the signature on the messages.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out an authentication as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the authentication mechanisms as described before.

## Claims

1. A method for authentication of a first terminal k towards a second terminal in an ad-hoc network, said method comprising:

    generating the public/private key pairs which said first terminal will have to use based on a unique secret value $s_k$ based on repeatedly applying a one-way hash function on said secret value $s_k$, whereas the number of repeatedly applying said hash function depends on the time when said authentication is performed;
    checking the authenticity of a so generated public key by verifying that the public key is bound to a public hash-code value V signed by a trusted authority
    generating an initialization value $P_k$ by said first terminal k based on repeatedly applying m times a one-way hash function on a secret value $s_k$ which is specific for said first terminal k;
    calculating by a trusted authority one or more derived initialization values based on a secret value K only known to said trusted authority or certified by a trusted authority and further based on said value $P_k$;
    generating a public/private key pair by said first terminal based on a secret value $s_k$ whereas said public/private key pair is generated based on repeatedly applying a one-way hash function on said secret value $s_k$ a number of times n, n<m, and further based on said one or more derived initialization values, whereas the number of times n which said hash function is applied depends on the time at which said authentication is to be performed, and whereas said authentication comprises:

    verifying by said second terminal that the public key generated by said first terminal is bound to said secret value K based on using a value derived by applying m-n times said one-way hash function on the value obtained by applying said hash function n times on said secret value $s_k$, thereby verifying that the public key is bound to said public hash code value V which is derived based on said secret value K.

2. The method of claim 1, wherein the number how many times the hash function has to be applied depends on how many time intervals of fixed length have passed until the authentication is performed.

3. The method of claim 1 or 2, further comprising:

generating an initialization value based on $P_k = \prod_{j=0}^{m} f^j(s_k)$

generating a private key $K_i$ of said public/private key pair based on $\prod_{j=0}^{m-i-1} f^j(s_k)$ and further based on said one or more derived values;

generating said public key of said public/private key pair based on $g^{K_i}$;

generating a helper value $H_i$ based on $\prod_{j=m-i}^{m} f^j(s_k)$;

whereas said verification by said second terminal comprises: calculating $\left(g^{K_i}\right)^{H_i}$ to verify that the public key $g^{K_i}$ generated by said first terminal is bound to said secret value K, wherein $f$ is a cryptographic (one-way) hash-function and wherein $G=(G,*)$ is a finite cyclic group of order $q$ for some large $q$ and $g \in G$ is a generator of $G$.

4. The method of one of claims 1 to 3, wherein said one or more derived initialization values comprise a value $Q_k$ being derived based on a division of the secret value K by $P_k$ and said private key of public/private key pair is generated based on $Q_k * \prod_{j=0}^{m-i-1} f^j(s_k)$, wherein $f$ is a cryptographic (one-way) hash-function

5. The method of one of the preceding claims, wherein said private key of public/private key pair is generated based on $a_i * \prod_{j=0}^{m-i-1} f^j(s_k)$ with $a_i \neq a_{i+n}$ for i $\in$ 0,1,...,$m$ -1 $and$ $n \in$ 1,2,...,$m$ - $i$ - 1, and whereas a helper value is generated based on $\dfrac{1}{a_i} * \prod_{j=m-i}^{m} f^j(s_k)$, wherein $f$ is a cryptographic (one-way) hash-function.

6. The method of claim5, wherein said one or more derived initialization values comprise a value $Q_k$ being derived based on $K = P_k * Q_k + r_k$, and whereas for verifying the authentication said second terminal calculates

$$\left(g^{K_i} * g^{\frac{a_i * r_k}{P_k} * \prod_{j=0}^{m-i-1} f^j(s_k)}\right)^{H_i}.$$

7. The method of one of the preceding claims, comprising:

dividing a certain time period into m intervals, whereas in the i-th interval the private key $K_i$ is calculated based on $\prod_{j=0}^{m-i-1} f^j(s_k)$, wherein $f$ is a cryptographic (one-way) hash-function.

8. The method of one of the preceding claims, wherein an authentication is only considered to be successful if the number of valid signatures received within a certain time period by the second terminal exceeds a certain threshold.

9. The method of one of the preceding claims, wherein the value K is chosen by said first terminal and a hash value derived from this secret value is certified by a trusted authority and used for verifying the authentication.

10. The method of one of the preceding claims, wherein

the ad-hoc network is a vehicular ad-hoc network, and wherein said method comprises:

during an initialization phase, for a car k, calculating $P_k$ and the one or more derived initialization values, in a time interval i, calculating the private key $K_i$, the public key, and the helper value and generating a certificate containing the public key corresponding to the private key with which a message is encrypted and being signed with the private key $K_i$ ;
transmitting the encrypted message and the certificate, the helper value and

$$g^{\frac{a_i*r_k}{P_k}*\prod_{j=0}^{m-i-1}f^j(s_k)}$$

to the second terminal;
verifying the authentication by the second terminal by verifying that the public key of the certificate is bound to said secret value K, wherein $f$ is a cryptographic (one-way) hash-function and wherein $G=(G,*)$ is a finite cyclic group of order q for some large $q$ and $g \in G$ is a generator of $G$.

11. The method of claim 10, wherein the private key with which the message is signed is different from the private key used for signing the certificate being used for the verification.

12. An apparatus for authentication of a first terminal k towards a second terminal in an ad-hoc network, said apparatus comprising:

a module for generating the public/private key pairs which said first terminal will have to use based on a unique secret value $s_k$ based on repeatedly applying a one way hash function on said secret value $s_k$, whereas the number of repeatedly applying said hash function depends on the time when said authentication is performed;
a module for transmitting the public key thus generated to a terminal for checking the authenticity of the thus generated public key by verifying that the public key is bound to a public hash-code value V signed by a trusted authority, said apparatus further comprising:

means for generating an initialization value $P_k$ by said first terminal k based on repeatedly applying m times a one-way hash function on a secret value $s_k$ which is specific for said first terminal k, wherein there have been calculated by a trusted authority one or more derived initialization values based on a secret value K only known to said trusted authority or certified by a trusted authority and further based on said value $P_k$;
means for generating a public/private key pair by said first terminal based on a secret value $s_k$ whereas said public/private key pair is generated based on repeatedly applying a one-way hash function on said secret value $s_k$ a number of times n, n<m, and further based on said one or more derived initialization values, whereas the number of times n which said hash function is applied depends on the time at which said authentication is to be performed.

13. An apparatus for authentication of a first terminal k towards a second terminal in an ad-hoc network, said apparatus comprising:

a module for receiving a public key which has been generated by said first terminal by generating the public/ private key pairs which said first terminal will have to use based on a unique secret value $s_k$ based on repeatedly applying a one way hash function on said secret value $s_k$, whereas the number of repeatedly applying said hash function depends on the time when said authentication is performed;
a module for checking the authenticity of the thus received public key by verifying that the public key is bound to a public hash-code value V signed by a trusted authority , wherein
there have been calculated by a trusted authority one or more derived initialization values based on a secret value K only known to said trusted authority or certified by a trusted authority and further based on said value $P_k$ ; wherein
there has been generated a public/private key pair by said first terminal based on a secret value $s_k$ whereas said public/private key pair has been generated based on repeatedly applying a one-way hash function on said

secret value $s_k$ a number of times n, n<m, and further based on said one or more derived initialisation values, whereas the number of times n which said hash function is applied depends on the time at which said authentication is to be performed, wherein said apparatus further comprises:

means for verifying by said second terminal that the public key generated by said first terminal is bound to said secret value K based on using a value derived by applying m-n times said one-way hash function on the value obtained by applying said hash function n times on said secret value $s_k$, thereby verifying that the public key is bound to said public hash code value V which is derived based on said secret value K.

**14.** The apparatus of claim 12 or 13, further comprising:

one or more modules for implementing the further features of one of claims 2 to 11.

**15.** A computer program comprising computer program code which when being executed by a computer enables said computer to carry out a method of one of claims 1 to 11.

**Patentansprüche**

**1.** Verfahren zur Authentifizierung eines ersten Terminals k gegenüber einem zweiten Terminal in einem Ad-hoc-Netzwerk, wobei das Verfahren aufweist:

Erzeugen von öffentlichen/privaten Schlüsselpaaren, die das erste Terminal basierend auf einem besonderen geheimen Wert $s_k$ erzeugen muss, und zwar basierend auf der wiederholten Anwendung einer Ein-Weg-Hash-Funktion auf den geheimen Wert $s_k$, wobei die Anzahl der wiederholten Anwendung der Hash-Funktion abhängt von der Zeit, bei der die Authentifizierung durchgeführt wird;
Überprüfen der Authentizität eines derart generierten öffentlichen Schlüssels durch Verifizieren, dass der öffentliche Schlüssel an einen öffentlichen Hash-Code-Wert V gebunden ist, der von einer vertrauenswürdigen Autorität signiert wurde;
Erzeugen eines Initialisierungswerts $P_k$ durch das erste Terminal k basierend auf dem m-maligen wiederholten Anwenden einer Ein-Weg-Hash-Funktion auf einen geheimen Wert $s_k$, der spezifisch für das erste Terminal k ist;
Berechnen von einem oder mehreren abgeleiteten Initialisierungswerten durch eine vertrauenswürdige Autorität basierend auf einem geheimen Wert K, der nur der vertrauenswürdigen Autorität bekannt ist oder durch eine vertrauenswürdige Autorität zertifiziert wurde und ferner basiert auf dem Wert $P_k$;
Erzeugen eines öffentlichen/privaten Schlüsselpaars durch das erste Terminal basierend auf einem geheimen Wert $s_k$, wobei das öffentliche/private Schlüsselpaar erzeugt wird basierend auf dem wiederholten Anwenden einer Ein-Weg-Hash-Funktion auf den geheimen Wert $s_k$, und zwar n-Male, wobei n<m, und ferner basierend auf dem einen oder mehreren Initialisierungswerten, wobei die Anzahl von Malen n, die die Hash-Funktion angewendet wird, abhängt von der Zeit, bei der die Authentifizierung durchgeführt werden soll, und wobei die Authentifizierung umfasst:

Verifizieren durch das zweite Terminal, dass der öffentliche Schlüssel, der durch das erste Terminal erzeugt wurde, an den geheimen Wert K gebunden ist, und zwar basierend auf der Verwendung eines Werts, der abgeleitet wird durch die m-n-malige Anwendung der Ein-Weg-Hash-Funktion auf den Wert, der durch n-maliges Anwenden der Hash-Funktion auf den geheimen Wert $s_k$ erhalten wurde, um dadurch zu verifizieren, dass der öffentliche Schlüssel an den öffentlichen Hash-Code-Wert V gebunden ist, der basierend auf dem geheimen Wert K abgeleitet wurde.

**2.** Verfahren nach Anspruch 1, wobei
die Anzahl von Malen, die die Hash-Funktion angewendet werden muss, davon abhängt, wie viele Zeitintervalle einer festen Länge vergangen sind, bis die Authentifizierung durchgeführt wird.

**3.** Verfahren nach Anspruch 1 oder 2, ferner aufweisend:

Erzeugen eines Initialisierungswerts basierend auf $P_k = \prod_{j=0}^{m} f^j(s_k)$

Erzeugen eines privaten Schlüssels $K_i$ des öffentlichen/privaten Schlüsselpaars basierend auf $\prod_{j=0}^{m-i-1} f^j(s_k)$ und ferner basierend auf dem einen oder mehreren abgeleiteten Werten;

Erzeugen des öffentlichen Schlüssels des öffentlichen/privaten Schlüsselpaars basierend auf $g^{K_i}$;

Erzeugen eines Helferwertes $H_i$ basierend auf $\prod_{j=m-i}^{m} f^j(s_k)$;

wobei die Verifikation durch das zweite Terminal umfasst:

Berechnen von $\left(g^{K_i}\right)^{H_i}$ zum Verifizieren, dass der öffentliche Schlüssel $g^{K_i}$, der durch das erste Terminal erzeugt wurde, an den geheimen Wert K gebunden ist,

wobei $f$ eine kryptographische (Ein-Weg)-Hash-Funktion ist, und wobei $G=(G,*)$ eine finite zyklische Gruppe der Ordnung q für einige große q ist und $g \in G$ ein Generator von G ist.

4. Verfahren nach einem der Ansprüche 1 bis 3, wobei der eine oder mehrere abgeleitete Initialisierungswert einen Wert $Q_k$ umfasst, der abgeleitet wird, basierend auf einer Division des geheimen Wert K durch $P_k$ und wobei der private Schlüssel des öffentlichen/privaten Schlüsselpaars erzeugt wird basierend auf $Q_k * \prod_{j=0}^{m-i-1} f^j(s_k)$, wobei $f$ eine kryptographische (Ein-Weg)-Hash-Funktion ist.

5. Verfahren nach einem der vorhergehenden Ansprüche, wobei der private Schlüssel des öffentlichen/privaten Schlüsselpaars erzeugt wird basierend auf $a_i * \prod_{j=0}^{m-i-1} f^j(s_k)$ mit $a_i \neq a_{i+n}$ für $i \in 0,1,..., m-1$ und $n \in 1,2,..., m -i -1$, und wobei a ein Helferwert ist, der erzeugt wird basierend auf $\frac{1}{a_i} * \prod_{j=m-i}^{m} f^j(s_k)$, wobei $f$ eine kryptographische (Ein-Weg)-Hash-Funktion ist.

6. Verfahren nach Anspruch 5, wobei der eine oder mehrere Initialisierungswerte einen Wert $Q_k$ umfasst, der abgeleitet wird basierend auf $K = P_k * Q_k + r_k$, und wobei zum Verifizieren der Authentifikation das zweite Terminal folgendes berechnet:

$$\left(g^{K_i} * g^{\frac{a_i * r_k}{P_k} * \prod_{j=0}^{m-i-1} f^j(s_k)}\right)^{H_i}$$

7. Verfahren nach einem der vorhergehenden Ansprüche, aufweisend:

Teilen einer bestimmten Zeitperiode in m Intervalle, wobei in dem i-ten Intervall der private Schlüssel $K_i$ berechnet wird basierend auf $\prod_{j=0}^{m-i-1} f^j(s_k)$, wobei $f$ eine kryptographische (Ein-Weg)-Hash-Funktion ist.

8. Verfahren nach einem der vorhergehenden Ansprüche, wobei eine Authentifikation nur dann als erfolgreich betrachtet wird, wenn die Anzahl von gültigen Signaturen, die innerhalb einer bestimmten Zeitperiode von dem zweiten Terminal erhalten werden, einen bestimmten Schwellwert überschreitet.

**9.** Verfahren nach einem der vorhergehenden Ansprüche, wobei
der Wert K von dem ersten Terminal gewählt wird und ein Hash-Wert, der von diesem geheimen Wert abgeleitet wird, durch eine vertrauenswürdige Autorität zertifiziert wird und zum Verifizieren der Authentifizierung verwendet wird.

**10.** Verfahren nach einem der vorhergehenden Ansprüche, wobei
das Ad-hoc-Netzwerk ein Fahrzeug-Ad-hoc-Netzwerk ist und das Verfahren aufweist:

während einer Initialisierungsphase, Berechnen von $P_k$ für ein Auto k und die ein oder mehrere abgeleiteten Initialisierungswerte,
in einem Zeitintervall i, Berechnen des privaten Schlüssels $K_i$, des öffentlichen Schlüssels und des Helferwerts und Erzeugen eines Zertifikats, das den öffentlichen Schlüssel enthält, der dem privaten Schlüssel entspricht, mit dem eine Nachricht verschlüsselt wird und mit dem privaten Schlüssel $K_i$ signiert wird;
Übertragen der verschlüsselten Nachricht und des Zertifikats, des Helferwerts und von

$$g^{\frac{a_i * r_k}{P_k} * \prod_{j=0}^{m-i-1} f^j(s_k)}$$

an das zweite Terminal;
Verifizieren der Authentifizierung durch das zweite Terminal durch Verifizieren, dass der öffentliche Schlüssel des Zertifikats gebunden ist an den geheimen Wert K, wobei $f$ eine kryptographische (Ein-Weg)-Hash-Funktion ist, und wobei $G=(G,*)$ eine finite zyklische Gruppe der Ordnung q für einige große q ist und $g \in G$ ein Generator von G.

**11.** Verfahren nach Anspruch 10, wobei der private Schlüssel, mit dem die Nachricht signiert wird, unterschiedlich ist von dem privaten Schlüssel, der verwendet wird zum Signieren des Zertifikats, das für die Verifikation verwendet wird.

**12.** Vorrichtung zum Authentifizieren eines ersten Terminals k gegenüber einem zweiten Terminal in einem Ad-hoc-Netzwerk, wobei die Vorrichtung aufweist:

ein Modul zum Erzeugen des öffentlichen/privaten Schlüsselpaars, das das erste Terminal verwenden muss, basierend auf einem besonderen geheimen Wert $s_k$ basierend auf wiederholtem Anwenden einer Ein-Weg-Hash-Funktion auf den geheimen Wert $s_k$, wobei die Anzahl des wiederholten Anwendens der Hash-Funktion abhängt von der Zeit, zu der die Authentifizierung durchgeführt wird;
ein Modul zum Übertragen des so erzeugten öffentlichen Schlüssels an ein Terminal, um die Authentizität des so erzeugten öffentlichen Schlüssels zu überprüfen, in dem verifiziert wird, dass der öffentliche Schlüssel gebunden ist an einen öffentlichen Hash-Code-Wert V, der von einer vertrauenswürdigen Autorität signiert wurde, wobei die Vorrichtung ferner aufweist:

eine Einrichtung zum Erzeugen eines Initialisierungswerts $P_k$ durch das erste Terminal k basierend auf dem wiederholten m-maligen Anwenden einer Ein-Weg-Hash-Funktion auf einen geheimen Wert $s_k$, der spezifisch für das erste Terminal k ist, wobei
von einer vertrauenwürdigen Autorität einer oder mehrere abgeleitete Initialisierungswerte berechnet wurden, und zwar basierend auf einem geheimen Wert K, den nur die vertrauenswürdige Autorität kennt oder der von dieser zertifiziert wurde und ferner basierend auf dem Wert $P_k$;
eine Einrichtung zum Erzeugen eines öffentlichen/privaten Schlüsselpaars durch das erste Terminal basierend auf einem geheimen Wert $s_k$, wobei das öffentliche/private Schlüsselpaar erzeugt wird durch das wiederholte Anwenden einer Ein-Weg-Hash-Funktion auf den geheimen Wert $s_k$, und zwar n-Male, wobei n<m, und ferner basierend auf dem einen oder mehreren abgeleiteten Initialisierungswerten, wobei die Anzahl von Malen n, die die Hash-Funktion angewendet wird, abhängt von der Zeit, zu der die Authentifizierung durchgeführt wird.

**13.** Vorrichtung zum Authentifizieren eines ersten Terminals k gegenüber einem zweiten Terminal in einem Ad-hoc-Netzwerk, wobei die Vorrichtung aufweist:

ein Modul zum Empfangen eines öffentlichen Schlüssels, der erzeugt wurde durch das erste Terminal durch Erzeugen des öffentlichen/privaten Schlüsselpaars, das das erste Terminal verwenden muss, basierend auf einem besonderen geheimen Wert $s_k$ basierend auf dem wiederholten Anwenden einer Ein-Weg-Hash-Funktion auf den geheimen Wert $s_k$, wobei die Anzahl des wiederholten Anwendens der Hash-Funktion abhängt von der Zeit, zu der die Authentifizierung durchgeführt wird;
ein Modul zum Überprüfen der Authentizität des so erhaltenen öffentlichen Schlüssels durch Verifizieren, dass der öffentliche Schlüssel an einen öffentlichen Hash-Code-Wert V gebunden ist, der durch eine vertrauenswürdige Autorität signiert wurde, wobei
einer oder mehrere abgeleitete Initialisierungswerte von einer vertrauenswürdigen Autorität berechnet wurden basierend auf einem geheimen Wert K, den nur die vertrauenswürdige Autorität kennt oder der von dieser zertifiziert wurde und ferner basierend auf dem Wert $P_k$, wobei
ein öffentliches/privates Schlüsselpaar durch das erste Terminal basierend auf einem geheimen Wert $s_k$ erzeugt wurde, wobei das öffentliche/private Schlüsselpaar erzeugt wurde basierend auf wiederholtem Anwenden einer Ein-Weg-Hash-Funktion auf den geheimen Wert $s_k$ für eine Anzahl von n-Malen, wobei n<m, und ferner basierend auf dem ein oder mehreren abgeleiteten Initialisierungswerten, wobei die Anzahl von Malen n, die die Hash-Funktion angewendet wird, abhängt von der Zeit, zu der die Authentifizierung durchgeführt werden soll, wobei die Vorrichtung ferner aufweist:

Eine Einrichtung zum Verifizieren durch das zweite Terminal, dass der öffentliche Schlüssel, der durch das erste Terminal erzeugt wurde, an den geheimen Wert K gebunden ist, und zwar basierend auf der Verwendung eines Werts, der abgeleitet wird durch die m-n-malige Anwendung der Ein-Weg-Hash-Funktion auf den Wert, der durch n-maliges Anwenden der Hash-Funktion auf den geheimen Wert $s_k$ erhalten wurde, um dadurch zu verifizieren, dass der öffentliche Schlüssel an den öffentlichen Hash-Code-Wert V gebunden ist, der basierend auf dem geheimen Wert K abgeleitet wurde.

14. Vorrichtung nach Anspruch 12 oder 13 ferner aufweisend:

ein oder mehrere Module zum Implementieren der weiteren Merkmale von einem der Ansprüche 2 bis 11.

15. Computerprogramm aufweisend Computerprogrammcode, der, wenn er von einem Computer ausgeführt wird, den Computer in die Lage versetzt, ein Verfahren gemäß einem der Ansprüche 1 bis 11 auszuführen.

**Revendications**

1. Procédé destiné à l'authentification d'un premier terminal k vers un deuxième terminal dans un réseau ad hoc, ledit procédé comprenant les étapes consistant à :

générer les paires de clés publiques/privées que ledit premier terminal doit utiliser sur la base d'une valeur secrète unique $s_k$ basée sur l'application à répétition d'une fonction de hachage unidirectionnelle sur ladite valeur secrète $s_k$, dans lequel le nombre d'applications à répétition de ladite fonction de hachage dépend du moment auquel ladite authentification est effectuée ;
contrôler l'authenticité d'une clé publique ainsi générée en vérifiant que la clé publique est liée à une valeur de code de hachage publique V signée par une autorité de confiance ;
générer une valeur d'initialisation $P_k$ par ledit premier terminal k sur la base de l'application à répétition m fois d'une fonction de hachage unidirectionnelle sur une valeur secrète $s_k$ qui est spécifique au dit premier terminal k ;
calculer par une autorité de confiance une ou plusieurs valeurs d'initialisation dérivées sur la base d'une valeur secrète K uniquement connue de ladite autorité de confiance ou certifiée par une autorité de confiance et en outre basée sur ladite valeur $P_k$ ;
générer une paire de clés publique/privée par ledit premier terminal sur la base d'une valeur secrète $s_k$ dans lequel ladite paire de clés publique/privée est générée sur la base de l'application à répétition d'une fonction de hachage unidirectionnelle sur ladite valeur secrète $s_k$ un nombre de fois n, n<m, et en outre basée sur lesdites une ou plusieurs valeurs d'initialisation dérivées, dans lequel le nombre de fois n que ladite fonction de hachage est appliquée dépend du moment auquel ladite authentification doit être effectuée, et dans lequel ladite authentification comprend les étapes consistant à :

vérifier par ledit deuxième terminal que la clé publique générée par ledit premier terminal est liée à ladite valeur secrète K sur la base de l'utilisation d'une valeur dérivée par l'application m-n fois de ladite fonction de hachage unidirectionnelle sur la valeur obtenue par l'application de ladite fonction de hachage n fois sur ladite valeur secrète $s_k$, en vérifiant de ce fait que la clé publique est liée à ladite valeur de code de hachage publique V qui est dérivée sur la base de ladite valeur secrète K.

2. Procédé selon la revendication 1, dans lequel
le nombre de fois que la fonction de hachage doit être appliquée dépend du nombre d'intervalles de temps de longueur fixe qui se sont écoulés avant que l'authentification ne soit effectuée.

3. Procédé selon la revendication 1 ou 2, comprenant en outre les étapes consistant à :

générer une valeur d'initialisation sur la base de $P_k = \prod_{j=0}^{m} f^j(s_k)$ ;

générer une clé privée de ladite paire de clés publique/privée sur la base de $\prod_{j=0}^{m-i-1} f^j(s_k)$ et en outre sur la base desdites une ou plusieurs valeurs dérivées ;
générer ladite clé publique de ladite paire de clés publique/privée sur la base de $g^{K_i}$ ;

générer une valeur d'aide $H_i$ sur la base de $\prod_{j=m-i}^{m} f^j(s_k)$ ;

dans lequel ladite vérification par ledit deuxième terminal comprend l'étape consistant à :

calculer $(g^{K_i})^{H_i}$ pour vérifier que la clé publique $g^{K_i}$ générée par ledit premier terminal est liée à ladite valeur secrète K, dans lequel f est une fonction de hachage cryptographique (unidirectionnelle) et dans lequel G=(G, *) est un groupe cyclique fini d'ordre q pour un grand q et g $\in$ G est un générateur de G.

4. Procédé selon l'une des revendications 1 à 3, dans lequel lesdites une ou plusieurs valeurs d'initialisation dérivées comprennent une valeur $Q_k$ qui est dérivée sur la base d'une division de la valeur secrète K par $P_k$ et ladite clé privée de la paire de clés publique/privée est générée sur la base de $Q_k * \prod_{j=0}^{m-i-1} f^j(s_k)$, dans lequel f est une fonction de hachage cryptographique (unidirectionnelle).

5. Procédé selon l'une des revendications précédentes, dans lequel ladite clé privée de la paire de clés publique/ privée est générée sur la base de $a_i * \prod_{j=0}^{m-i-1} f^j(s_k)$ avec $a_i \neq a_{i+n}$ pour $i \in 0,1,...,m$ -1 et $n \in 1,2,..,m$ - $i$ -1, et dans lequel une valeur d'aide est générée sur la base de $\frac{1}{a_i} * \prod_{j=m-i}^{m} f^j(s_k)$, dans lequel f est une fonction de hachage cryptographique (unidirectionnelle).

6. Procédé selon la revendication 5, dans lequel lesdites une ou plusieurs valeurs d'initialisation dérivées comprennent une valeur $Q_k$ qui est dérivée sur la base de $K = P_k * Q_k + r_k$, et dans lequel pour vérifier l'authentification ledit deuxième terminal calcule $\left( g^{K_i} * g^{\frac{a_i * r_k}{P_k} * \prod_{j=0}^{m-i-1} f^j(s_k)} \right)^{H_i}$.

7. Procédé selon l'une des revendications précédentes, comprenant les étapes consistant à :

diviser une certaine période de temps en m intervalles, dans lequel dans le i-ème intervalle la clé privée $K_i$ est calculée sur la base de $\prod_{j=0}^{m-i-1} f^j(s_k)$, dans lequel f est une fonction de hachage cryptographique (unidirectionnelle).

8. Procédé selon l'une des revendications précédentes, dans lequel une authentification n'est considérée comme étant réussie que si le nombre de signatures valables reçues au cours d'une certaine période de temps par le deuxième terminal dépasse un certain seuil.

**9.** Procédé selon l'une des revendications précédentes, dans lequel
la valeur K est choisie par ledit premier terminal et une valeur de hachage dérivée de cette valeur secrète est certifiée par une autorité de confiance et utilisée pour vérifier l'authentification.

**10.** Procédé selon l'une des revendications précédentes, dans lequel
le réseau ad hoc est un réseau ad hoc véhiculaire, et dans lequel ledit procédé comprend les étapes consistant à :

au cours d'une phase d'initialisation, pour une voiture k, calculer $P_k$ et l'une ou plusieurs valeurs d'initialisation dérivées,
au cours d'un intervalle de temps i, calculer la clé privée $K_i$, la clé publique et la valeur d'aide et générer un certificat contenant la clé publique correspondant à la clé privée avec laquelle un message est crypté et étant signé avec la clé privée $K_i$ ;

transmettre le message crypté et le certificat, la valeur d'aide et $g^{\frac{a_i \cdot r_k}{P_k} \cdot \prod_{j=0}^{m-i-1} f^j(s_k)}$ au deuxième terminal ;
vérifier l'authentification par le deuxième terminal en vérifiant que la clé publique du certificat est liée à ladite valeur secrète K, dans lequel f est une fonction de hachage cryptographique (unidirectionnelle) et dans lequel G=(G,*) est un groupe cyclique fini d'ordre q pour un grand q et $g \in$ G est un générateur de G.

**11.** Procédé selon la revendication 10, dans lequel la clé privée avec laquelle le message est signé est différente de la clé privée utilisée pour signer le certificat utilisé pour la vérification.

**12.** Appareil destiné à l'authentification d'un premier terminal k vers un deuxième terminal dans un réseau ad hoc, ledit appareil comprenant :

un module pour générer les paires de clés publiques/privées que ledit premier terminal doit utiliser sur la base d'une valeur secrète unique $s_k$ basée sur l'application à répétition d'une fonction de hachage unidirectionnelle sur ladite valeur secrète $s_k$, dans lequel le nombre d'applications à répétition de ladite fonction de hachage dépend du moment auquel ladite authentification est effectuée ;
un module pour transmettre la clé publique ainsi générée à un terminal pour contrôler l'authenticité de la clé publique ainsi générée en vérifiant que la clé publique est liée à une valeur de code de hachage publique V signée par une autorité de confiance ; ledit appareil comprenant en outre :

des moyens pour générer une valeur d'initialisation $P_k$ par ledit premier terminal k sur la base de l'application à répétition m fois d'une fonction de hachage unidirectionnelle sur une valeur secrète $s_k$ qui est spécifique au dit premier terminal k ; dans lequel
il a été calculé par une autorité de confiance une ou plusieurs valeurs d'initialisation dérivées sur la base d'une valeur secrète K uniquement connue de ladite autorité de confiance ou certifiée par une autorité de confiance et en outre basée sur ladite valeur $P_k$ ;
des moyens pour générer une paire de clés publique/privée par ledit premier terminal sur la base d'une valeur secrète $s_k$ dans lequel ladite paire de clés publique/privée est générée sur la base de l'application à répétition d'une fonction de hachage unidirectionnelle sur ladite valeur secrète $s_k$ un nombre de fois n, n<m, et en outre basée sur lesdites une ou plusieurs valeurs d'initialisation dérivées,

dans lequel le nombre de fois n que ladite fonction de hachage est appliquée dépend du moment auquel ladite authentification doit être effectuée.

**13.** Appareil destiné à l'authentification d'un premier terminal k vers un deuxième terminal dans un réseau ad hoc, ledit appareil comprenant :

un module pour recevoir une clé publique qui a été générée par ledit premier terminal en générant les paires de clés publiques/privées que ledit premier terminal doit utiliser sur la base d'une valeur secrète unique $s_k$ basée sur l'application à répétition d'une fonction de hachage unidirectionnelle sur ladite valeur secrète $s_k$,

dans lequel le nombre d'applications à répétition de ladite fonction de hachage dépend du moment auquel ladite authentification est effectuée ;

un module pour contrôler l'authenticité de la clé publique ainsi reçue en vérifiant que la clé publique est liée à une valeur de code de hachage publique V signée par une autorité de confiance ; dans lequel

il a été calculé par une autorité de confiance une ou plusieurs valeurs d'initialisation dérivées sur la base d'une valeur secrète K uniquement connue de ladite autorité de confiance ou certifiée par une autorité de confiance et en outre basée sur ladite valeur $P_k$ ; dans lequel

il a été généré une paire de clés publique/privée par ledit premier terminal sur la base d'une valeur secrète $s_k$ dans lequel ladite paire de clés publique/privée a été générée sur la base de l'application à répétition d'une fonction de hachage unidirectionnelle sur ladite valeur secrète $s_k$ un nombre de fois n, n<m, et en outre basée sur lesdites une ou plusieurs valeurs d'initialisation dérivées, dans lequel le nombre de fois n que ladite fonction de hachage est appliquée dépend du moment auquel ladite authentification doit être effectuée, et dans lequel ledit appareil comprend en outre :

des moyens pour vérifier par ledit deuxième terminal que la clé publique générée par ledit premier terminal est liée à ladite valeur secrète K sur la base de l'utilisation d'une valeur dérivée par l'application m-n fois de ladite fonction de hachage unidirectionnelle sur la valeur obtenue par l'application de ladite fonction de hachage n fois sur ladite valeur secrète $s_k$, en vérifiant de ce fait que la clé publique est liée à ladite valeur de code de hachage publique V qui est dérivée sur la base de ladite valeur secrète K.

14. Appareil selon la revendication 12 ou 13, comprenant en outre :

un ou plusieurs modules pour mettre en oeuvre les autres caractéristiques de l'une des revendications 2 à 11.

15. Programme informatique comprenant un code de programme informatique qui lorsqu'il est exécuté par un ordinateur permet au dit ordinateur d'effectuer un procédé selon l'une des revendications 1 à 11.

$T_0$      $T_1$         ...        $T_i$

time = 0     time = 1*lifetime   time = 2*lifetime    ...    time = i*lifetime   time = (i+1)*lifetime

$T_0$ starts when
car is sold.

## Fig. 1

3. Car signs messages with the currently valid private key.

4. Signed messages and certificate are broadcasted to other cars.

Car C$_k$

Car C$_{k'}$

5. - Verifies that received certificate was issued by a black box that respects the security requirements defined by a trusted car manufacturer.
- Verifies that the signature on the message is correct.
- If both are successful, newly received message is checked against previously received messages and/or checked against messages received in the future.

Black box BB$_k$

Cert$_{CA}$(V, ...)

P$_k$

g$^r_k$

Q$_k$

s$_k$

A

nbSignatures

maxtime

2. Generated public/private key pair, the corresponding certificates and public parameter are transferred to the car.

g$^k$, H, priv, Cert(V, pub$_i$, ...)

Car C$_k$

Cert(V, pub$_i$, ...)

g$^k_i$

H

**Fig. 2**

1. Black box generates the currently valid public/private key pair, the corresponding certificates and public parameters.

- The car manufacturer defines some security requirements that prevent cars from signing a message with different private keys:

  - lifeTime: the validity period of cars' certificates (and public/private key pairs)
  - maxTime: the period of time during which an information must be sent by enough different cars to consider it as reliable

We have liftime>>maxTime

*maxtime*

*lifetime*

  -
$$t = \frac{nbSignatures}{max\,Time}$$

more than nbSignatures different signatures generated on messages that contain the same information must be received within a period maxTime to consider that information as reliable

<u>Fig. 3</u>

- The manufacturer has a secret key K (never disclosed) used to generated the check value V:

$$V = h(g^{A*K})$$

- Each car $C_k$ has a black box $BB_k$ that is tamper resistant and that respects the previous security requirements (lifetime , maxTime and t)
- During the manufacturing process $BB_k$ is transferred securely :

Same for all cars

- Check Value: $V = h(g^{A*K})$

- Secret key: $S_k$

- Large integer: $P_k = \prod_{j=0}^{m} f^j(s_k)$

- Large integer: $Q_k$

- Large integer: $g^{r_k}$

- Large integer: $A$

- Large integer: $nbSignatur\ es$

- Large integer: $\max time$

**Fig. 4**

- CA's secret key : $K$

We have

$$K \gg P_k$$

Proper to each car

So it always exist $Q_k$ and $r_k$ such that

$$K = P_k * Q_k + r_k$$

$$= P_k * (Q_k + \frac{r_k}{P_k})$$

EP 2 003 813 B1

**In time interval $T_i$ :**

**1. $BB_k$ generates** $\quad K_i = A * a_i * Q_k * \prod_{j=0}^{m-i-1} f^j(s_k)$ **that is never published**

**2.**

Black box $\rightarrow$ Car $C_k$ $\rightarrow$ Car $C_{k'}$

Once per time interval block:

$priv_{T_i}$

$Cert_i$ contaning $pub_{T_i}$

$$g^{K_i} = g^{A*a_i*Q_k*\prod_{j=0}^{m-i-1} f^j(s_k)}$$

$$H_i = A * \frac{1}{a_i} * \prod_{j=m-i}^{m} f^j(s_k)$$

$$g^{A*\frac{a_i*r_k}{P_k}*\prod_{j=0}^{m-i-1} f^j(s_k)}$$

**Once per time interval**

For each message block:

Message signed with $priv_{T_i}$

$Cert_i$ contaning $pub_{T_i}$

$$g^{K_i} = g^{A*a_i*Q_k*\prod_{j=0}^{m-i-1} f^j(s_k)}$$

$$H_i = A * \frac{1}{a_i} * \prod_{j=m-i}^{m} f^j(s_k)$$

$$g^{A*\frac{a_i*r_k}{P_k}*\prod_{j=0}^{m-i-1} f^j(s_k)}$$

**For each message**

<u>Fig. 5</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 06122041 A

**Non-patent literature cited in the description**

- **WEIMERSKIRCH A et al.** Identity Certified Authentication for Ad-hoc Networks. *PROCEEDINGS OF THE FIRST ACM WORKSHOP ON SECURITY OF AD HOC AND SENSOR NETWORKS,* 31 October 2003, ISBN 1-58113-783-4, 33-40